# EUROPEAN PATENT APPLICATION

(11) **EP 2 083 220 A2**
(43) Date of publication of application: **29.07.2009**
(21) Application number: 08169458.0
(22) Date of filing: 19.11.2008
(51) Int. Cl.: F23R 3/06, F23R 3/50, F23R 3/00

(54) **Effusion cooling for gas turbine combustors**

(30) Priority: 25.01.2008 US 20133
(71) Applicant: Honeywell International Inc., Morristown, NJ 07962 (US)
(72) Inventor: Woodcock, Gregory O., Morristown, NJ 07962 (US); Hanson, Amy T., Morristown, NJ 07962 (US); Reynolds, Robert S., Morristown, NJ 07962 (US); Armstrong, Mike, Morristown, NJ 07962 (US)
(74) Representative: Buckley, Guy Julian

(57) **Abstract**

A combustor for a turbine engine includes an outer liner and an inner liner circumscribed by the outer liner to form a combustion chamber therewith in which an air and fuel mixture is combusted to form streamlines of combustion gases. A first plurality of effusion cooling holes is formed in at least one of the inner or outer liners, with the first plurality of effusion cooling holes being oriented as a function of the streamlines.

## Description

### STATEMENT REGARDING FEDERALLY SPONSORED RESEARCH OR DEVELOPMENT

This invention was made with Government support under contract numbers DAAH10-98-C0023 and F33615-98-C-2803 awarded by the JTAGG III program of the US Government. The Government has certain rights in this invention.

### TECHNICAL FIELD

The present invention generally relates to gas turbine engines, and more particularly, to schemes for cooling combustors of gas turbine engines.

### BACKGROUND

Gas turbine engines, such as those used to power modem commercial aircraft, include a compressor for pressurizing a supply of air, a combustor for burning a fuel in the presence of the pressurized air, and a turbine for extracting energy from the resultant combustion gases. The combustor typically includes radially spaced apart inner and outer liners that form a combustion chamber in which the fuel and air mixture is burned.

The hot combustion gases create a temperature environment that may limit the useful operating time, and ultimately, the component life of the combustor and other components of the engine. Accordingly, cooling of the engine is desired. Conventional systems and methods for cooling the combustor, such as louvers and impingement cooling, have been met with mixed success, at best. Effusion cooling has also been utilized. Effusion cooling generally involves an array of small holes through the combustor liners that admit a layer of cooling air to the inner surfaces of the combustion chamber. The cooling air buffers the inner surfaces from the combustion gases and provides some convective cooling as it passes through the liners. To maintain engine efficiency, the most effective schemes for effusion cooling are desired to minimize the cooling air usage. Conventional effusion cooling techniques orient the effusion cooling holes relative to the geometric datums, such as along the engine to provide axial effusion or tangential to the engine axis to provide tangential effusion. More effective and efficient techniques for effusion cooling the combustor are desired.

Accordingly, it is desirable to provide combustors with improved temperature management, and it is particularly desirable to provide improved effusion cooling techniques for combustors. Furthermore, other desirable features and characteristics of the present invention will become apparent from the subsequent detailed description of the invention and the appended claims, taken in conjunction with the accompanying drawings and this background of the invention.

### BRIEF SUMMARY

In one exemplary embodiment, a combustor for a turbine engine includes an outer liner and an inner liner circumscribed by the outer liner to form a combustion chamber therewith in which an air and fuel mixture is combusted to form streamlines of combustion gases. A first plurality of effusion cooling holes is formed in at least one of the inner or outer liners, with the first plurality of effusion cooling holes being oriented as a function of the streamlines.

In another exemplary embodiment, a method is provided to design a combustor. The combustor includes an outer liner and an inner liner that form a combustion chamber in which an air and fuel mixture is combusted to form combustion gases. The method includes predicting streamlines of the combustion gases; providing a first plurality of effusion cooling holes in the inner or outer liner; orienting the first plurality of effusion cooling holes as a function of the streamlines.

In yet another exemplary embodiment, a combustor apparatus is provided for a turbine engine in which an air and fuel mixture is combusted to form streamlines of combustion gases. The combustor apparatus includes a combustor component and a plurality of effusion cooling holes formed in the combustor component. The effusion cooling holes are oriented as a function of the streamlines.

### BRIEF DESCRIPTION OF THE DRAWINGS

The present invention will hereinafter be described in conjunction with the following drawing figures, wherein like numerals denote like elements, and

FIG. 1 is a partial, cross-sectional side elevation view of a combustor in a gas turbine engine according to one exemplary embodiment of the present invention;

FIG. 2 is a partial, plan view of an inner liner of the combustor of FIG. 1; and

FIG. 3 is a partial, plan view of an outer liner of the combustor of FIG. 1.

### DETAILED DESCRIPTION

The following detailed description of the invention is merely exemplary in nature and is not intended to limit the invention or the application and uses of the invention. Furthermore, there is no intention to be bound by any theory presented in the preceding background of the invention or the following detailed description of the invention.

Broadly, the exemplary embodiments discussed herein provide cooling schemes for combustors of gas turbine engine assemblies. More particularly, the inner and outer liners of the combustors are provided with effusion cooling holes for supplying a film of cooling air to inner surfaces. The effusion cooling holes can be oriented as a function of the streamlines of the combustion gases. The effusion cooling holes can be used to cool the relatively large inner surface areas of the combustion chambers in an efficient manner. Embodiments discussed herein may find beneficial use in many industries and applications, including aerospace, automotive, and electricity generation, but particularly in high performance aircraft.

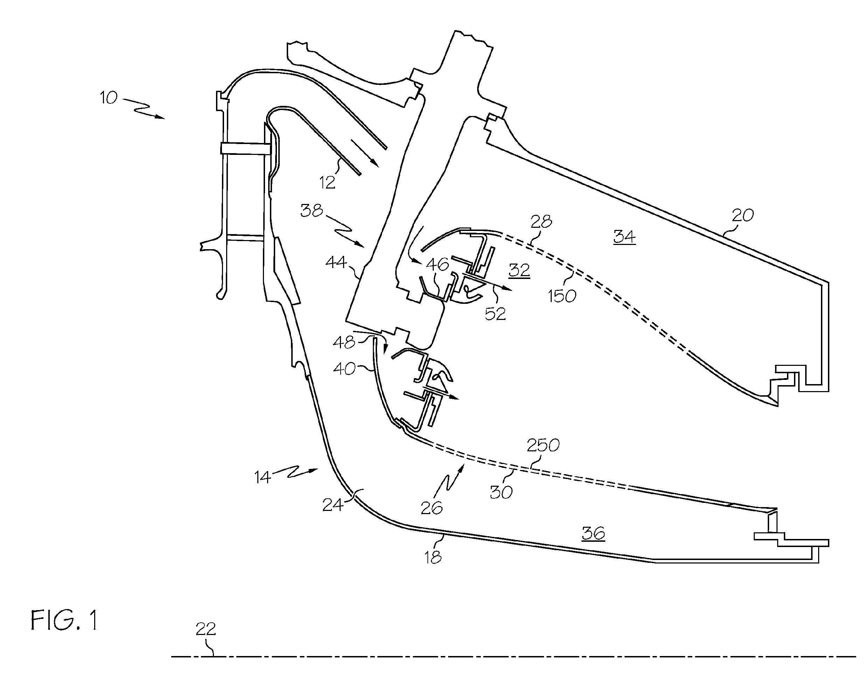

FIG. 1 is a cross-sectional view of a gas turbine engine assembly 10 in accordance with an exemplary embodiment. The engine assembly 10 includes a compressor (not shown), a diffuser 12, a combustion module 14, and a turbine module (not shown). Generally, the compressor provides compressed air via the diffuser 12 to the combustion module 14, where it is mixed with fuel and ignited to produce combustion gases. The combustion gases are exhausted to the turbine for energy extraction.

The combustion module 14 includes a radially inner case 18 and a radially outer case 20 concentrically arranged with respect to the inner case 18. The inner and outer cases 18, 20 circumscribe an axially extending engine centerline 22 to define an annular pressure vessel 24. The combustion module 14 further includes a combustor 26 residing within the annular pressure vessel 24. The combustor 26 is formed by an outer liner 28 and an inner liner 30 that is circumscribed by the outer liner 28 to define an annular combustion chamber 32. The liners 28, 30 cooperate with the cases 18, 20 to define respective outer and inner air plenums 34, 36.

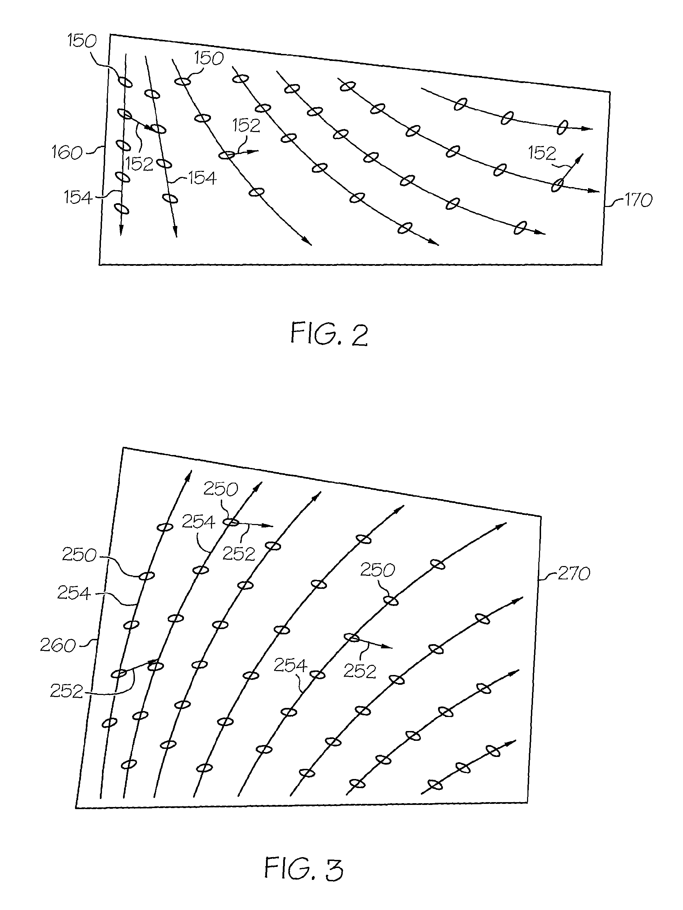

The liners 28, 30 further include a plurality of effusion cooling holes 150, 250 that deliver a film of cooling air to the respective inner surfaces of the liners 28, 30. Although FIG. 1 depicts effusion cooling holes 150, 250 on both liners 28, 30, alternate embodiments of the combustor include effusion cooling holes 150, 250 on only one of the liners 28, 30. The effusion cooling holes 150, 250 will be discussed in greater detail below with reference to FIGS. 2 and 3.

The outer and inner liners 28, 30 may be constructed of any material suitable for high temperature combustible systems. Examples of suitable materials are nickel alloys, such as Haynes 230 or Hastelloy X alloys. Typically, the outer and inner liners 28, 30 have a single wall construction, although other configurations such as double wall constructions are also possible.

The combustor 26 further includes a front end assembly 38 having an annularly extending shroud 40, fuel injectors 44, and fuel injector guides 46. The front end assembly 38 further includes inlets 52 for the admission of compressed air into the combustion chamber 32 that is mixed with the fuel and combusted. Although the FIG. 1 illustrates compressed air entering the combustion chamber 32 at the front end assembly 38 of the combustor 26, in alternate embodiments, air admission holes can be provided in one or both of the inner and outer liners 28, 30 in lieu of or in addition to the inlets 52.

One fuel injector 44 and one fuel injector guide 46 are shown in the partial cross-sectional view of FIG. 1. In one embodiment, the combustor 26 includes a total of sixteen circumferentially distributed fuel injectors 44, but it will be appreciated that the combustor 26 could be implemented with more or less than this number of injectors 44.

The shroud 40 extends between and is secured to the forwardmost ends of the outer and inner liners 28, 30. The shroud 40 includes a plurality of circumferentially distributed shroud ports 48 that accommodate the fuel injectors 44.

Each fuel injector 44 is secured to the outer case 20 and projects through one of the shroud ports 48. Each fuel injector 44 introduces a swirling, intimately blended fuel-air mixture that supports combustion in the combustion chamber 32.

FIG. 2 is a partial, plan view of the inner liner 30 of the combustor 26 of FIG. 1, and FIG. 3 is a partial, plan view of the outer liner 28 of the combustor 26 of FIG. 1. FIGS. 2 and 3 are discussed together, and each show the inner surface (or "hot side") of the respective liner 28, 30 from a front or upstream end 160, 260 to a back or downstream end 170, 270. FIGS. 2 and 3 additionally depict local streamlines 154, 254 produced by the combustion gases during operation. The streamlines 154, 254 are considered the average streamline, and are parallel to the average direction of fluid flow during a given period of time in a given area or volume. Although generally flowing downstream, the streamlines 154, 254 can have a tangential component, particularly at the front ends 160, 260 of the respective liner 28, 30. The streamlines 154, 254 can flow in any direction, including upstream, based on combustor geometry and combustion conditions.

As discussed above, in many applications, cooling is beneficial to prevent issues resulting from the high temperatures of the combustion gases. In one exemplary embodiment, effusion cooling holes 150, 250 are provided in the liners 28, 30. The effusion cooling holes 150, 250 are generally relatively small, closely spaced holes that permit compressed air to pass through the walls of the liners 28, 30 to supply a layer of cooling air to the hot sides. In particular, the cooling air serves to buffer the hot sides from the combustion gases, as well as to convectively cool the walls as the air passes through.

In the depicted embodiment, the effusion cooling holes 150, 250 exit the surface to be cooled at an angle of 20 degrees (to the surface) and appear oval in the plane of the surface. The orientation of the oval indicates the direction at which air exits the respective effusion cooling hole. To further clarify, arrows 152, 252 are provided for some of the effusion cooling holes 150, 250 to indicate the direction at which air exits.

The effusion cooling holes 150, 250 are typically oriented as a function of the streamlines 154, 254. Particularly, the effusion cooling holes 150, 250 can be oriented at an angle to the streamlines 154, 254. In the depicted embodiment, the effusion cooling holes 150, 250 are oriented at 60° relative to the streamlines 154, 254. In other embodiments, the effusion cooling holes 150, 250 can be oriented at 45° to 135°, or in further embodiments, 60° to 90° relative to the streamlines 154, 254, or more broadly, at any angle 0° to 360° relative to the streamlines 154, 254. As such, as the streamlines 154, 254 change, the orientation of the effusion cooling holes 150, 250 relative to the engine center line changes. In the depicted embodiment, the orientation of the effusion cooling holes 150, 250 is constant relative to the streamlines 154, 254, although in other embodiments, the orientation can vary. Coolant flowing at such an angle may impart swirl to the mainstream flow. Depending on the specific combustor design, a smaller or larger angle can be specified, depending on the desired impact on mainstream swirl

The orientation of the effusion cooling holes results in a cooling flow that persists longer on the surface to be cooled, increasing the effectiveness of the cooling scheme. Orientating the cooling holes such that the cooling holes are aligned with the streamlines, may result in a jet of coolant air with dual vortex flow on each side of the coolant jet. This vortex flow may tend to lift the jet off the surface to be cooled, and entrains hot combustion gases into the cooling jet. This can cause the layer of air next to the combustor wall to increase in temperature. This warmed air tends to be replaced by fresh coolant to maintain wall temperature. This additional coolant may reduce the efficiency of the engine or, if not provided, may result in walls with reduced life. When the coolant is introduced at an angle to the streamline, only a single vortex may be formed. This vortex forms on the side of the jet away form the surface to be cooled. The mainstream flow tends to flow over the jet, holding it next to the surface and the single vortex entrains less hot combustion gases. The net result can be a more effective cooling system and method with either lower temperatures achieved or cooling air requirement, thereby resulting in improved engine efficiency and/or improve durability. In other words, the orientation of the effusion cooling holes can result in a single vortex of cooling flow that tends to reduce the combustion gases from infiltrating the effusion cooling layer, while keeping the effusion cooling layer attached to the surface to be cooled. This creates increased cooling effectiveness, reduced coolant flow rates, and higher engine efficiencies.

Unlike the prior art cooling systems and methods that include heat shields, impingement cooling, and/or louvers, the effusion cooling holes 150, 250 may simplify cooling in most embodiments in that no additional components need be attached to the combustor 26. Such components may be provided in addition, however, in embodiments where more cooling is desired. The durability of the combustor 26 may be extended by a reduction in temperature gradients along the combustor 26, and additionally, manufacturing costs may be reduced.

As a general matter, the effusion cooling holes 150, 250 can be patterned to improve cooling. Moreover, the density of the effusion cooling holes 150, 250 may vary with application and may depend on factors, including the dimensions of the combustor 26, the material of manufacture of the outer and inner liners 28, 30, the velocity of the cooling flow, and the temperature of the combustion gases. For some applications, the effusion cooling holes 150, 250 may be uniformly spaced, or alternatively, the effusion cooling holes 150, 250 may be unevenly spaced to provide more cooling flow to "hot spots" resulting from the geometry of the combustor 26 and temperature characteristics of the combustion gases. The depicted and disclosed effusion cooling hole patterns and densities are merely exemplary in nature, and such parameters vary based on application, conditions, and desired level of cooling.

The particular placement of effusion cooling holes 150, 250 can be assisted by computation fluid dynamics (CFD) analysis. In one embodiment, CFD can be utilized to predict the streamlines 154, 254, including the effects of inlet swirl, primary orifices and, dilution orifices. This enables a designer to orient the individual effusion cooling holes 150, 250 relative to the streamlines 154, 254. Since the effusion cooling holes 150, 250 may alter the streamlines 154, 254 themselves, several iterations of this process may be desired to properly orient the effusion cooling holes 150, 250. The effusion cooling holes 150, 250 may be formed by drilling techniques such as electrical-discharge machining (EDM), stationary percussion laser machining and percussion on-the-fly laser drilling or with complex casting techniques.

The effusion cooling holes 150, 250 are generally 0.015 inches in diameter and larger, such as 0.020 - 0.030 inches in diameter, although the diameter may vary with application and may depend on factors such as the dimensions of the combustor 26, the temperature of the combustion gases, the velocity of the cooling flow, and the amount and size of particulate matter in the cooling flow. Individual hole shape is generally cylindrical , with minor deviations due to manufacturing method i.e. edge rounding, tapers, out-of-round or oblong, etc. Other embodiments could use holes with cross sections of varying size, such as "fan" shaped (i.e., hole flow area increases from the hole inlet to the hole exit, to reduce coolant velocity) holes. The effusion cooling holes 150, 250 are typically provided at acute angles, such as 20°, to the surface of the combustor 26.

Although the combustor 26 is configured as an annular combustor 26, as illustrated herein, aspects of the present invention are also applicable to other types of combustors, such as single-can, multi-can and other annular arrangements, as well as components that can be broadly considered as combustor components, including parts downstream of the combustion chamber, such as outer transition liners, inner transition liners, scrolls, turbine vanes and blades, as well as turbine shrouds. Engine assemblies of the present invention can be utilized in gas turbine applications such as aircraft propulsion, land-based vehicle propulsion, marine based propulsion, auxiliary power units and power generation.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A combustor (26) for a turbine engine (10), comprising:
an outer liner (28);
an inner liner (30) circumscribed by the outer liner (28) and forming a combustion chamber therewith in which an air and fuel mixture is combusted to form streamlines of combustion gases; and
a first plurality of effusion cooling holes (150, 250) formed in at least one of the inner or outer liners (28, 30), the first plurality of effusion cooling holes (150, 250) being oriented as a function of the streamlines (154, 254).

2. The combustor (26) of claim 1, wherein the first plurality of effusion cooling (250) holes are formed in the outer liner (28).

3. The combustor (26) of claim 1, wherein the first plurality of effusion cooling holes (150) are formed in the inner liner (30).

4. The combustor (26) of claim 1, wherein the first plurality of effusion cooling holes (150) are formed in the inner liner (30), and the combustor further comprises a second plurality of effusion cooling holes (250) formed in the outer liner (28) and oriented as a function of the streamlines (254).

5. The combustor (26) of claim 1, wherein the first plurality of effusion cooling holes (150, 250) are oriented at an angle of about 60° to about 90° relative to the streamlines (154,254).

6. The combustor (26) of claim 1, wherein the first plurality of effusion cooling holes (150, 250) are oriented at an angle of about 60° to about 90° relative to the streamlines (154, 254) in a downstream direction.

7. The combustor (26) of claim 1, wherein the first plurality of effusion cooling holes (150, 250) are oriented at an angle of about 60° relative to the streamlines (154, 254).

8. The combustor (26) of claim 1, wherein the first plurality of effusion cooling holes (150, 250) are oriented at a constant angle relative to the streamlines (154, 254).

9. The combustor (26) of claim 1, wherein the first plurality of effusion cooling holes (150, 250) are oriented at a variable angle relative to the streamlines (154, 254).

10. The combustor (26) of claim 1, wherein the combustion chamber (32) is an annular combustion chamber (32).
